# EUROPÄISCHE PATENTANMELDUNG

(11) **EP 0 703 107 A2**
(43) Veröffentlichungstag der Anmeldung: **27.03.1996**
(21) Anmeldenummer: 95110462.9
(22) Anmeldetag: 05.07.1995
(51) Int. Cl.: B60J 5/04, B60J 1/17

(54) **Fahrzeugtür**

(30) Priorität: 21.09.1994 DE 4433654; 12.04.1995 DE 19513850
(71) Anmelder: SCHADE KG, D-58840 Plettenberg (DE)
(72) Erfinder: Dancasiu, Michael, D-42105 Wuppertal (DE); Huster, Holger, D-58840 Plettenberg (DE)

(57) **Zusammenfassung**

2.1 Bei einer Fahrzeugtür, bei der die Glasscheibe 6 in feststehenden, aufrechten Führungsschienen 7, 8 geführt ist, soll erreicht werden, daß die Höhe der Glasscheibe 6 und damit die Abmessungen des Montageausschnittes 10 im Türinnenblech 3 reduziert werden, wobei die volle Höhe der Führungsschienen 7, 8 zur Führung der Glasscheibe 6 ausgenutzt werden kann.

2.2 Erfindungsgemäß ist die Fahrzeugtür mit einer Linearführung für die Glasscheibe 6 und/oder für die Führungsschienen 7, 8 ausgerüstet. Die Linearführung erstreckt sich in Längsrichtung der Führungsschienen 7, 8. Die Länge der Linearführung ist deutlich geringer als die Längen der Führungsschienen 7, 8. Dadurch wird eine Verschiebung der durch den Montageausschnitt 10 hindurch eingesetzten Glasscheibe ermöglicht.

Bei einer ersten Ausführungsform wird die Linearführung durch Mitnehmerteile 14, 15 gebildet, die in den Führungsschienen 7, 8 verfahrbar sind. Die Mitnehmerteile 14, 15 sind mit jeweils einem Langloch 16 versehen, in welches der an der Glasscheibe angesetzte Führungsbolzen eingreift. Dadurch wird eine Verschiebung der Glasscheibe von einer unteren Montagestellung in eine Zwischenstellung möglich, ohne daß die Mitnehmerteile 14, 15 verschoben werden.

Bei einer zweiten Ausführungsform sind in einem Trägerblech 4 im Bereich der Führungsschienen 7, 8 Langlöcher vorgesehen. An den Führungsschienen 7, 8 angesetzte Halter 19,20 greifen in diese Langlöcher ein. Dadurch wird eine Verschiebung der Führungsschienen in Richtung zum Glasscheibenfeld möglich. Dabei wird auch die Glasscheibe bewegt.

2.3 Die erfindungsgemäße Fahrzeugtür ist besonders für Personenkraftwagen geeignet.

## Beschreibung

Die vorliegende Erfindung betrifft eine Fahrzeugtür mit einem Türaußen-, einem Türinnenblech und einem ggfs. dazwischen liegenden Trägerblech, einer mittels eines Fensterhebers öffen- und schließbaren Glasscheibe, die in zwischen dem Türaußen- und dem Türinnenblech befestigten Führungsschienen mittels eines oder mehrerer am unteren Rand der Glasscheibe festgelegter Bolzen geführt ist, wobei das Türinnenblech einen Montageausschnitt für die Glasscheibe aufweist, und wobei unterhalb des Glasscheibenfeldes ein Türfensterschacht vorgesehen ist.

Bei den aus der Praxis bekannten Fahrzeugtüren dieser Art steht die Höhe zur Breite der Glasscheibe in einem in engen Grenzen liegenden Verhältnis. Daraus ergibt sich, daß bei zunehmender Breite der Glasscheibe auch die Höhe entsprechend größer wird, wobei jedoch die Breite der Glasscheibe immer größer ist als die Höhe. Die Montage der Glasscheibe erfolgt durch einen Montageausschnitt, der aus dem Türinnenblech ausgespart ist. Die Höhe des Montageausschnittes ist dabei mindestens so groß wie das größte Höhenmaß der Glasscheibe. Zur Montage der Glasscheibe in den Montageausschnitt wird diese so gekippt und verschoben, daß sie in den Ausschnitt einführbar ist. Am unteren Rand der Scheibe ist eine Hebeschiene an der dem Türinnenblech abgewandten Seite festgelegt. Der Fensterheber ist als Bau- bzw. Montageeinheit an einem Trägerblech angeordnet, das an dem Türinnenblech befestigt werden kann, so daß er sich zusammen mit der Glasscheibe in dem zwischen dem Türinnen- und Türaußenblech liegenden Innenraum der Tür befindet. Außerdem sind am unteren Rand der Glasscheibe wenigstens zwei Bolzen angesetzt, die gegenüber der Glasscheibe vorstehen und in den aufrechten Führungsschienen geführt sind. Nach dem Einsetzen der Glasscheibe durch den Montageausschnitt hindurch wird diese zur Führung um ein vorgegebenes Maß nach oben, d.h. in Richtung zum Glasscheibenfeld geschoben. Der obere Randbereich der Glasscheibe liegt dann im Bereich der Türfensterschachtverstärkung und ist dort geführt.

Nachteilig ist bei dieser Konstruktion, daß im ungünstigsten Fall nur die um die Schachthöhe verminderte Länge der Führungsschiene zur Führung der Glasscheibe zur Verfügung steht, da die Glasscheibe in der Höhe so ausgelegt sein muß, daß in der oberen Schließstellung der untere Randbereich noch im Montageausschnitt des Türinnenbleches liegt bzw. im oberen Bereich der Führungsschienen. Daraus ergibt sich, daß die Höhe der Glasscheibe wesentlich größer sein muß als die Höhe des Glasscheibenfeldes. Andererseits darf die Höhe der Glasscheibe nicht größer sein als die lichte Höhe des Montageausschnittes, da sonst der Montageausschnitt vergrößert werden müßte. Dies wäre sehr nachteilig, weil die Scheibengrößen und Höhenverhältnisse der Fahrzeugtüren in sehr begrenzten Verhältnissen liegen. Mit zunehmender Größe des Montageausschnittes wird zwangsläufig die Stabilität der Fahrzeugtüren in erheblichem Maß herabgesetzt.

Der Erfindung liegt deshalb die Aufgabe zugrunde, eine Fahrzeugtür der eingangs näher beschriebenen Art unter Einhaltung vorgegebener Maßverhältnisse so zu gestalten, daß der Montageausschnitt so klein wie möglich sein und die Höhe der Führungsschienen nahezu vollständig zur Führung der Scheibe benutzt werden kann.

Diese Aufgabe wird durch eine sich in Längsrichtung der Führungsschienen erstreckende Linearführung für die Glasscheibe und/oder für die Führungsschienen gelöst, wobei die Länge der Linearführung wesentlich geringer ist als die Längen der Führungsschienen, so daß die Glasscheibe gegenüber dem Trägerblech von einer unteren Montagestellung in Richtung zum Glasscheibenfeld in eine untere Betriebsstellung verschiebbar ist, wobei der Verschiebeweg mit der Länge der Linearführung übereinstimmt.

Bei der erfindungsgemäßen Fahrzeugtür kann die Scheibenhöhe gegenüber den bisher bekannten Ausführungen deutlich geringer sein, da in der oberen Schließstellung der Glasscheibe dessen unterer Randbereich wesentlich höher liegt. Dies wird durch die Verschiebung der Glasscheibe gegenüber den Mitnehmerteilen aus der unteren Montagestellung in die angehobene, untere Betriebsstellung ermöglicht. Diese Verschiebung erfolgt unmittelbar nach dem Einsetzen der Glasscheibe und des an dem Trägerblech montierten Fensterhebers in den Montageausschnitt. In dieser Stellung liegen die Bolzen in den unteren Endbereichen der Linearführung. Zur Führung des oberen Randes der Glasscheibe innerhalb des Türfensterschachtes wird die Glasscheibe wie bisher nach oben in die Zwischenstellung geschoben. Dies wird durch die Linearführung ermöglicht. Beim Überführen der Glasscheibe in die obere Schließstellung wird dann von den Bolzen das zugehörige Mitnehmerteil mitgenommen. Das Einsetzen der Glasscheibe durch den Montageausschnitt in den Türinnenraum erfolgt, indem die Glasscheibe zunächst mit einer Breitseite nötigenfalls durch Kippen und seitliches Verschieben unter eine Seitenkante des Montageausschnittes geschoben und durch eine entgegengesetzte Querbewegung in die Grundstellung innerhalb des Montageausschnittes überführt wird. Durch die geringere Scheibenhöhe wird eine große Ersparnis an Material erreicht, wodurch die Kosten erheblich gesenkt werden. Außerdem kann die Höhe und ggfs. auch die Breite des Montageausschnittes reduziert werden, so daß die Stabilität der Fahrzeugtür beträchtlich größer wird.

Gemäß einer ersten Ausführungsform ist vorgesehen, daß zur Bildung der Linearführung in jeder Führungsschiene ein mit einem sich in Verschieberichtung der Glasscheibe erstreckenden Langloch versehenes Mitnehmerteil verschiebbar geführt ist, und daß in das Langloch des Mitnehmerteiles der Bolzen eingreift, derart, daß die Glasscheibe gegenüber dem Mitnehmerteil verschiebbar ist, wobei in einer unteren Montagestellung der Glasscheibe der Bolzen am unteren Ende des Langloches und in der Schließlage der Glasscheibe am oberen Ende des Langloches anliegt.

Diese Ausführung ist konstruktiv besonders einfach, da sich der zusätzliche Mehraufwand auf die beiden Mitnehmerteile beschränkt. Bei der Verschiebung der Glasscheibe von der unteren Montagestellung in die Zwischenstellung verschieben sich die Mitnehmerteile nicht. Wird jedoch die Glasscheibe in eine Schließlage nach oben gefahren, werden die Mitnehmerteile mitgenommen. Sie wirken sinngemäß wie eine Verlängerung der Führungsschienen, wodurch die reduzierte Höhe der Glasscheibe erreicht wird.

Gemäß einer zweiten Ausführungsform ist vorgesehen, daß zur Bildung der Linearführung in dem Trägerblech im Bereich der Führungsschienen zwei Langlöcher vorgesehen sind, und daß an den Führungsschienen zwei in den Langlöchern geführte Halter befestigt sind, so daß die Führungsschienen mit der Glasscheibe gegenüber dem Trägerblech verschiebbar sind, wobei in einer unteren Montagestellung der Glasscheibe die Halter am unteren Ende der Langlöcher und in der Schließlage der Glasscheibe an den oberen Enden der Langlöcher anliegen. Durch die mögliche Verschiebung der Führungsschienen wird auch hier sinngemäß eine Verlängerung erreicht, die zu der Reduzierung der Höhe der Glasscheibe führt.

In weiterer Ausgestaltung des Erfindungsgegenstandes ist vorgesehen, daß die Höhe des Langloches im wesentlichen dem Abstand zwischen der oberen Kante des Montageausschnittes und dem unteren Rand des Glasscheibenfeldes entspricht. Dadurch wird eine Führung des oberen Randes der Glasscheibe innerhalb des Türfensterschachtes erreicht, wenn die Glasscheibe von der Montage-Einführstellung in die Zwischenstellung überführt wird. Eine konstruktiv einfache Lösung zur vollen Ausnutzung der Höhe jeder Führungsschiene unter Verwendung der Mitnehmerteile wird vorteilhaft dadurch erreicht, daß jedes Mitnehmerteil zumindest einen in die zugeordnete Führungsschiene eingreifenden Führungszapfen oder Führungsansatz aufweist, wobei der Führungszapfen im unteren Bereich des Mitnehmerteiles angeordnet ist. Dadurch steht der in das Langloch eingreifende Bolzen in der oberen Stellung in einem Versatz zum Führungszapfen bzw. Führungsansatz. In der oberen Schließstellung der Glasscheibe stehen dann die oberen Stirnflächen der Führungsschienen und die oberen Stirnflächen der Mitnehmerteile ebenfalls in einem Höhenversatz, wobei in jedem Fall die oberen Stirnflächen der Mitnehmerteile höher stehen als die Stirnflächen der Führungsschienen.

Anhand der beiliegenden Zeichnungen wird die Erfindung nachstehend noch näher erläutert. Es zeigen:
- **Fig. 1:**: eine erfindungsgemäße Fahrzeugtür in einer Seitenansicht mit Blick auf das Türinnenblech, wobei die Glasscheibe in den Montageausschnitt eingesetzt ist,
- **Fig. 2:**: eine der Fig. 1 entsprechende Darstellung, bei der jedoch die Glasscheibe nach oben in den Fensterschacht eingeschoben wurde,
- **Fig. 3:**: eine der Fig. 1 entsprechende Darstellung, jedoch in der oberen Schließlage der Glasscheibe,
- **Fig. 4:**: eine Schnittdarstellung gemäß der Linie IV - IV in der Fig. 1,
- **Fig. 5:**: einen Schnitt längs der Linie V - V in der Fig. 2,
- **Fig. 6:**: das Mitnehmerprofilstück als Einzelheit,
- **Fig. 7:**: einen Schnitt längs der Linie VII - VII in der Fig. 2,
- **Fig. 8, 9:**: den Türrahmen und die komplette Montageeinheit in Explosivdarstellung und gegenüber dem Beispiel nach Fig. 1 und 2 leicht abgewandelter Form,
- **Fig. 10:**: den Türrahmen und die Montageeinheit einer weiteren Ausführungsform in einer Innenansicht,
- **Fig. 11:**: einen Schnitt längs der Linie XI - XI in der Fig. 10,
- **Fig. 12:**: einen Schnitt längs der Linie XII - XII in der Fig. 10,
- **Fig. 12A:**: einen Schnitt längs der Linie XII - XII in der Fig. 10, jedoch die Glasscheibe in der angehobenen Stellung zeigend und
- **Fig. 13:**: einen Schnitt längs der Linie XIII - XIII in der Fig. 10.

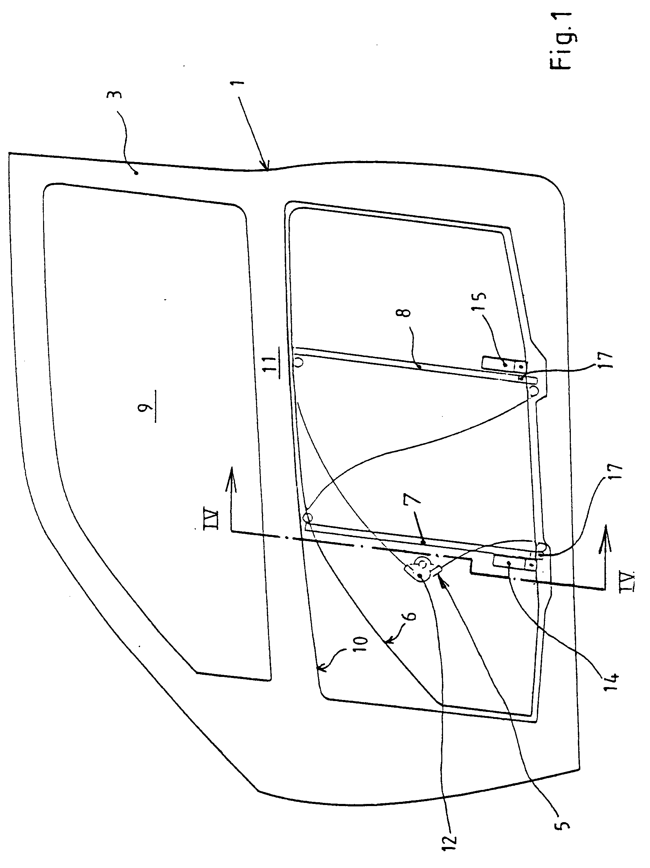

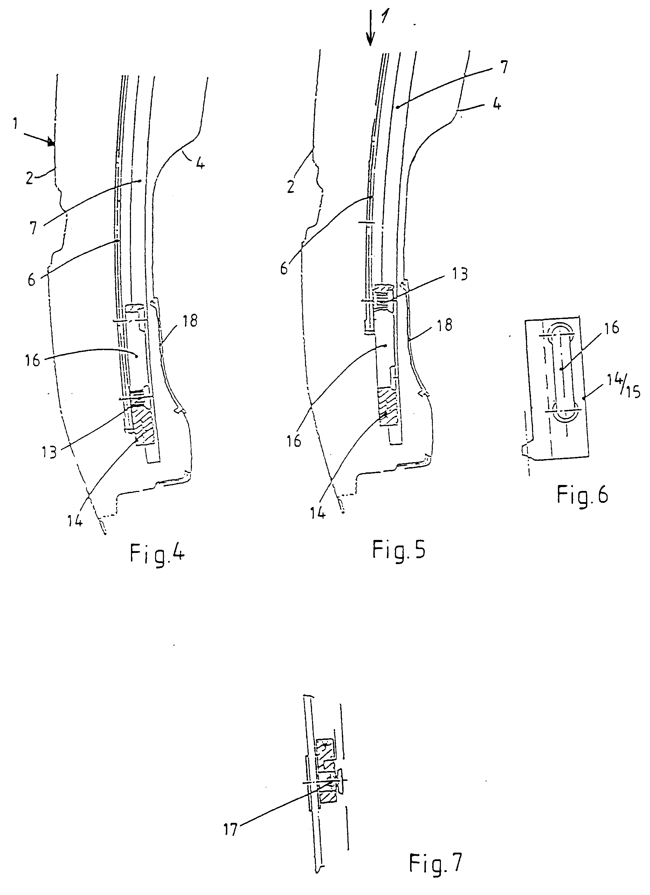

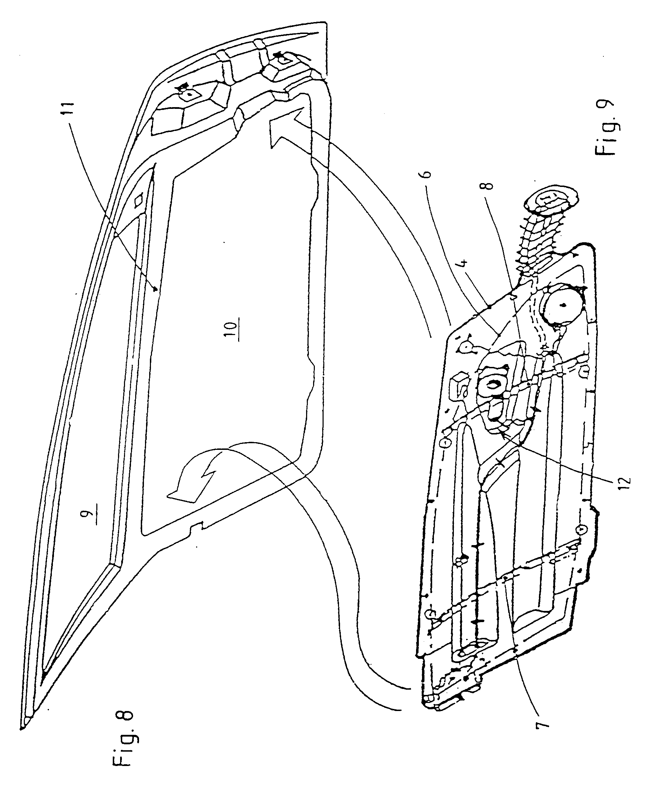

Die in den Figuren dargestellte Fahrzeugtür 1 besteht im wesentlichen aus einem Türaußenblech 2, einem dazu im Abstand liegenden Türinnenblech 3, einem Trägerblech 4, an dem ein Fensterheber 5 als Baueinheit festgelegt ist, einer Glasscheibe 6 und zwei Führungsschienen 7, 8 für die Glasscheibe 6. Die Führungsschienen 7 , 8 stehen im wesentlichen parallel und im Abstand zueinander. Im oberen Bereich ist die Fahrzeugtür 1 mit einem Glasscheibenfeld 9 versehen, das in der oberen Betriebsstellung von der Glasscheibe 6 abgedeckt wird. Im unteren Bereich ist die Fahrzeugtür 1 mit einem Montageausschnitt 10 ausgerüstet. Zwischen dem Glasscheibenfeld 9 und dem Montageausschnitt 10 befindet sich die Türfensterschachtverstärkung 11. Im dargestellten Ausführungsbeispiel ist die Breite der Glasscheibe 6 ein wenig geringer als die lichte Weite des Montageausschnittes 10. Im Gegensatz zu der dargestellten Ausführung kann die Breite der Glasscheibe 6 aber auch ein wenig größer sein als die lichte Weite des Montageausschnittes 10. Die Höhe der Scheibe ist ebenfalls immer geringfügig kleiner als die Höhe des Montageausschnittes. Aus den Figuren ergibt sich deutlich, daß die Breite der Glasscheibe 6 und somit auch die Breite des Montageausschnittes 10 wesentlich größer ist als die Höhe der Glasscheibe bzw. des Montageausschnittes. Der Fensterheber 5 ist nicht näher dargestellt. Lediglich der Antrieb ist durch das Bezugszeichen 12 gekennzeichnet. Der Fensterheber 5 ist als vorgefertigte Baueinheit an einem Trägerblech 4 befestigt, das in nicht dargestellter Weise am Türinnenblech 3 befestigt wird. Im unteren Bereich der Glasscheibe 6 sind lagegerecht zu den Führungsschienen 7, 8 Führungsbolzen 13 befestigt. Die Führungsbolzen 13 greifen gemäß dem Ausführungsbeispiel nach den Figuren 1 - 7 in Mitnehmerteile 14, 15 ein, die in den Führungsschienen 7, 8 in deren Längsrichtung verschiebbar geführt sind. Jedes Mitnehmerprofilstück 14 bzw. 15 ist mit einem sich in Längsrichtung erstreckenden Langloch 16 ausgerüstet, in welches der zugeordnete Führungsbolzen eingreift. Die Führungsbolzen stehen gegenüber der dem Türinnenblech (3) zugewandten Seite der Glasscheibe vor. Am freien Ende sind sie mit einem Bund versehen, damit eine Führung durch das Langloch 16 gegeben ist. Am unteren Ende, d.h. an der dem Glasscheibenfeld 9 abgewandten Seite, ist jedes Mitnehmerteil 14,15 mit einem Führungsansatz 17 ausgerüstet, der in nicht näher erläuterter Weise jeweils in die zugeordnete Führungsschiene 7 oder 8 eingreift.

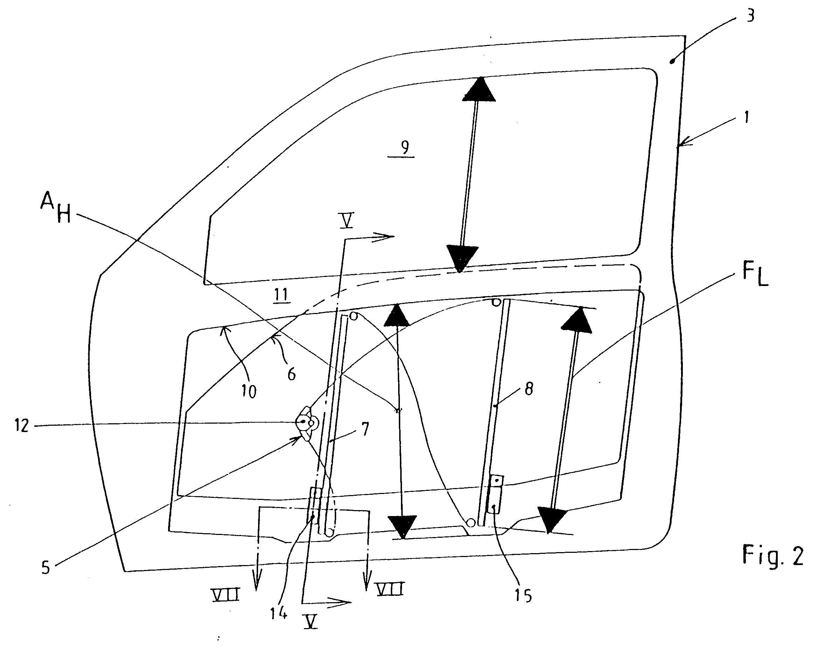

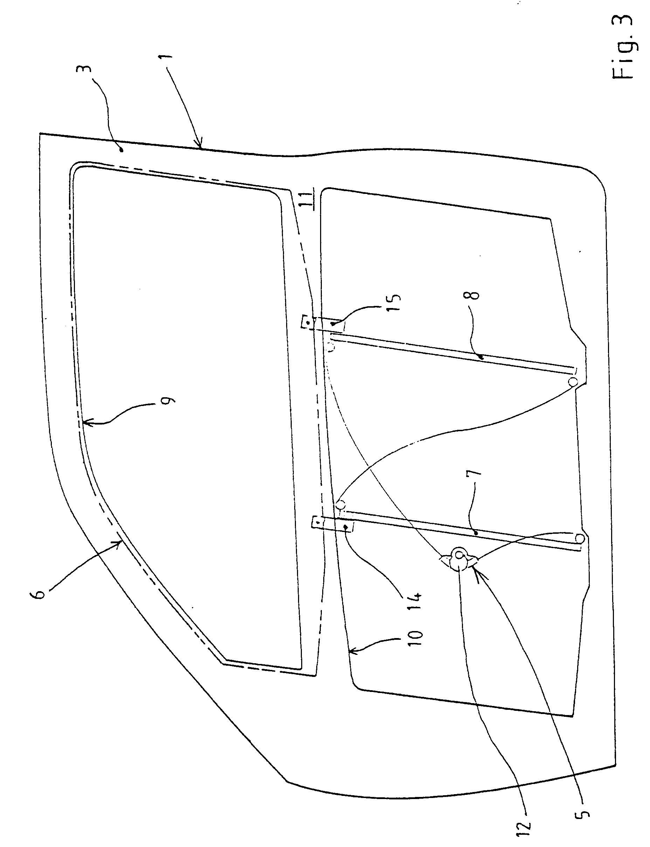

Zur Montage der Glasscheibe 6 und des Fensterhebers 5 werden diese Teile durch den Montageausschnitt 10 in den zwischen dem Türaußenblech 2 und dem Türinnenblech 3 liegenden Innenraum der Fahrzeugtür 1 eingesetzt. Diese Grundstellung ist in der Figur 1 dargestellt. Die Mitnehmerteile 14, 15 befinden sich dann in der unteren Position. Die Führungsbolzen 13 der Glasscheibe 6 liegen im unteren Endbereich der beiden Langlöcher 16. Zur Führung der Glasscheibe 6 wird diese anschließend wie aus Figur 2 ersichtlich in eine Zwischenstellung geschoben. Der obere Randbereich der Glasscheibe 6 greift dann in den Türfensterschacht 11 ein. Während dieser Verschiebebewegung verharren die Mitnehmerteile 14, 15 in ihrer unteren Position. Es erfolgt also ausschließlich eine Relativbewegung der Glasscheibe 6 zu den stillstehenden Mitnehmerprofilstücken 14, 15. Wird die Glasscheibe 6 anschließend in die in der Figur 3 dargestellte Schließstellung überführt, erfolgt eine Mitnahme der Mitnehmerteile 14, 15 durch die Führungsbolzen 13. Die Glasscheibe 6 wird nicht direkt in den Führungsschienen 7, 8 geführt, sondern mittelbar unter Zwischenschaltung der Mitnehmerteile 14, 15. Da die Führungsansätze 17 im unteren Bereich der Mitnehmerteile liegen, ist es möglich, die volle Höhe bzw. Länge der Führungsschienen 7, 8 zur Führung der Glasscheibe 6 auszunutzen. Insbesondere die Figur 3 zeigt, daß der untere Rand der Glasscheibe 6 in der Schließstellung oberhalb und im Abstand zu den oberen Stirnkanten der Führungsschienen 7, 8 steht. Daraus ergibt sich, daß die Höhe der Glasscheibe 6 und damit auch die Materialkosten deutlich reduziert werden kann.

Das an dem Türinnenblech 3 festgelegte Trägerblech 4 ist mit einer Öffnung versehen, die durch eine Verschlußkappe 18 abgedeckt ist. Wesentlich für die Erfindung ist bei diesem Ausführungsbeispiel die Ausbildung der Mitnehmerprofilstücke 14, 15, die eine Relativbewegung in der Montagestellung zwischen der Glasscheibe 6 und den Mitnehmerprofilstücken 14, 15 ermöglichen. Ferner ist wesentlich, daß die volle Höhe der feststehenden Führungsschienen 7, 8 ausgenutzt werden kann. Die Führungsschienen 7, 8 können in nicht dargestellter Weise über Streben oder ähnliche Bauteile am Türinnenblech 3 befestigt sein.

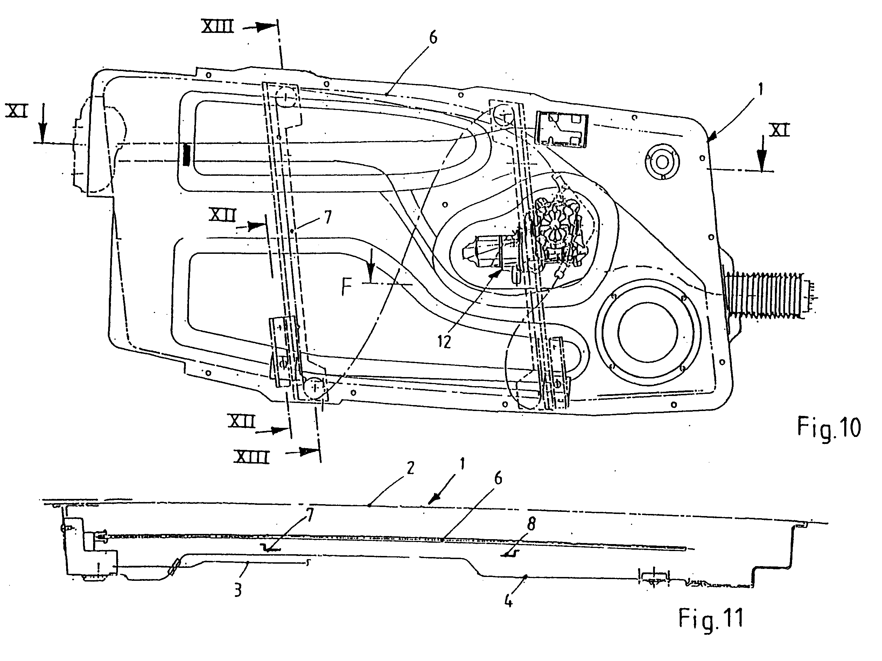

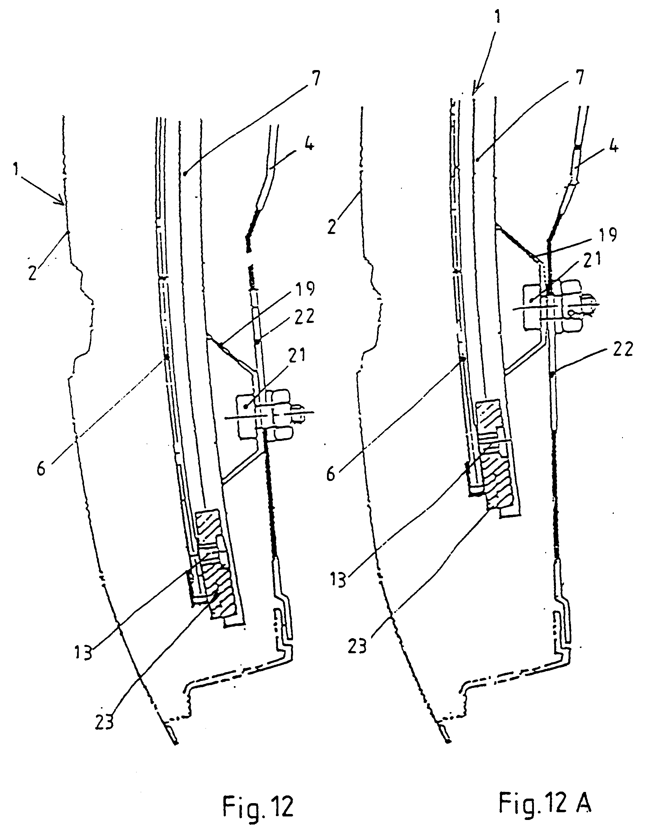

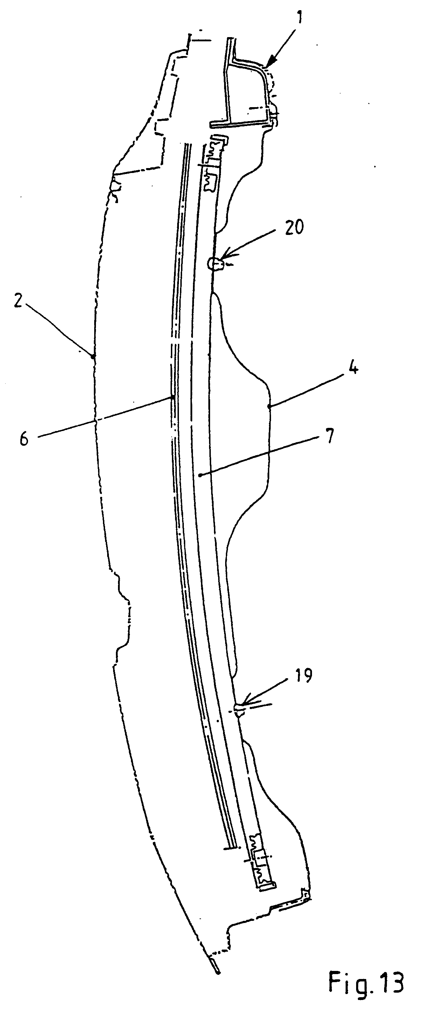

In den Figuren 10 - 13 ist ein weiteres Ausführungsbeispiel einer erfindungsgemäßen Fahrzeugtür dargestellt. Die gleichen Bauteile sind durch die gleichen Bezugszeichen gekennzeichnet. Bei diesem Ausführungsbeispiel sind an den beiden Führungsschienen 7, 8 im oberen und unteren Bereich zwei Halter 19, 20 befestigt. Diese Anordnung zeigen die Figuren 12, 12A, 13. Im dargestellten Ausführungsbeispiel sind die Halter 19, 20 trapezförmig ausgebildet. Der zu den Führungsschienen 7 bzw. 8 parallel stehende Schenkel grenzt an das Trägerblech 4 an. Jedem Halter 19, 20 der beiden Führungsschienen 7, 8 ist ein Führungsbolzen 21 in Form einer Schraube zugeordnet.

Jeder Führungsbolzen 21 ist in einem Langloch 22 geführt. Die Langlöcher 22 bilden in ihrer Gesamtheit eine Linearführung. Die an die Glasscheibe 6 angesetzten Führungsbolzen 13 greifen in Führungsstücke 23 ein, sind jedoch gegenüber der Glasscheibe 6 nicht verschiebbar. Bei diesem Ausführungsbeispiel ist jede Führungsschiene 7, 8 gegenüber dem Trägerblech 4 um die Länge des Langloches 22 verschiebbar. Die Montage erfolgt im wesentlichen wie bei dem vorhergehenden Ausführungsbeispiel. Die Grundstellung ist in der Figur 12 dargestellt. Die Halter 19 befinden sich dann in der unteren Position. Die Führungsbolzen 21 liegen dabei in der unteren Position der Langlöcher 22. Zum Einführen des oberen Randes der Glasscheibe 6 wird diese entsprechend der Figur 12A angehoben. Die Führungsbolzen 21 liegen dann in den oberen Bereichen der Langlöcher 22. Eine weitere Verschiebung der Führungsschienen 7, 8 ist nicht möglich. Zum Überführen der Glasscheibe 6 in die Schließlage wird diese in den Führungsschienen 7, 8 verschoben. Dabei übernehmen die Führungsstücke 23 die eigentliche Führung. In der in der Figur 12 A dargestellten Stellung stehen die oberen Stirnenden der Führungsschienen 7, 8 höher als bei den bisher bekannten Ausführungen, so daß die Höhe der Glasscheibe 6 verkürzt werden kann.

Die Führungsbolzen 21 sind als Schrauben ausgebildet. Dadurch wird erreicht, daß in der in der Figur 12 dargestellten oberen Stellung die Führungsschienen 7, 8 gleichzeitig fest mit dem Trägerblech 4 verbunden werden können. Weitere Ausführungsbeispiele liegen im Rahmen der Erfindung. Wesentlich ist immer, daß die Wirkung der Führungsschienen über ihre eigentliche Länge hinaus vergrößert wird.

## Patentansprüche

1. Fahrzeugtür mit einem Türaußen-, einem Türinnen- und einem ggfs. dazwischenliegenden Trägerblech, einer mittels eines Fensterhebers öffen- und schließbaren Glasscheibe, die in zwischen dem Türaußen- und dem Türinnenblech befestigten Führungsschienen mittels eines oder mehrerer am unteren Rand der Glasscheibe festgelegter Bolzen geführt ist, wobei das Türinnenblech einen Montageausschnitt für die Glasscheibe aufweist und wobei unterhalb des Glasscheibenfeldes ein Türfensterschacht vorgesehen ist, dadurch gekennzeichnet, daß eine sich in Längsrichtung der Führungsschienen (7, 8) erstreckende Linearführung für die Glasscheibe (6) und/oder für die Führungsschienen (7, 8) vorgesehen ist, daß die Länge der Linearführung deutlich geringer ist als die Längen der Führungsschienen (7, 8), so daß die Glasscheibe (6) gegenüber dem Trägerblech (4) von einer unteren Montagestellung in Richtung zum Glasscheibenfeld in eine untere Betriebsstellung verschiebbar ist, wobei der Verschiebeweg mit der Länge der Linearführung übereinstimmt.

2. Fahrzeugtür nach Anspruch 1, dadurch gekennzeichnet, daß zur Bildung der Linearführung in jeder Führungsschiene (7, 8) ein mit einem sich in Verschieberichtung der Glasscheibe (6) erstreckenden Langloch (16) versehenes Mitnehmerteil (14, 15) verschiebbar geführt ist, und daß in das Langloch (16) des Mitnehmerteiles (14, 15) der Bolzen (13) eingreift, derart, daß die Glasscheibe (6) gegenüber dem Mitnehmerteil (14, 15) verschiebbar ist, wobei in einer unteren Montagestellung der Glasscheibe (6) der Bolzen am unteren Ende des Langloches (16) und in der Schließlage der Glasscheibe (6) am oberen Ende des Langloches (16) anliegt.

3. Fahrzeugtür nach Anspruch 1, dadurch gekennzeichnet, daß zur Bildung der Linearführung in dem Trägerblech (4) im Bereich der Führungsschienen (7, 8) zwei Langlöcher (22) vorgesehen sind, und daß an den Führungsschienen (7, 8) zwei in den Langlöchern geführte Halter (19, 29) befestigt sind, so daß die Führungsschienen (7, 8) mit der Glasscheibe (6) gegenüber dem Trägerblech (4) verschiebbar sind, wobei in einer unteren Montagestellung der Glasscheibe (6) die Halter (19, 20) am unteren Ende der Langlöcher (22) und in der Schließlage der Glasscheibe (6) am oberen Ende der Langlöcher (22) anliegen.

4. Fahrzeugtür nach einem oder mehreren der vorhergehenden Ansprüche 1 - 3, dadurch gekennzeichnet, daß die Höhe jedes Langloches (16) im wesentlichen dem Abstand zwischen der oberen Kante des Montageausschnittes (10) und dem unteren Rand des Glasscheibenfeldes (9) entspricht.

5. Fahrzeugtür nach Anspruch 2, dadurch gekennzeichnet, daß Jedes Mitnehmerprofilstück (14, 15) einen in die zugeordnete Führungsschiene (7, 8) eingreifenden Führungszapfen oder Führungsansatz (17) aufweist, und daß der Führungszapfen im unteren Bereich des jeweiligen Mitnehmerteiles (14, 15) angeordnet ist.
